# EUROPÄISCHE PATENTSCHRIFT

(11) **EP 2 473 428 B1**
(45) Veröffentlichungstag und Bekanntmachung des Hinweises auf die Patenterteilung: **11.12.2013**
(21) Anmeldenummer: 10748085.7
(22) Anmeldetag: 27.08.2010
(51) Int. Cl.: B65G 23/44

(54) **VORRICHTUNG UND VERFAHREN ZUM SPANNEN VON ENDLOS UMLAUFENDEN FÖRDERMITTELN**
DEVICE AND METHOD FOR TENSIONING ENDLESS CONVEYORS
DISPOSITIF ET PROCEDE POUR TENDRE DES MOYENS DE TRANSPORT SANS FIN

(30) Priorität: 01.09.2009 DE 102009040509
(43) Veröffentlichungstag der Anmeldung: 11.07.2012
(73) Patentinhaber: SSI Schäfer Noell GmbH Lager-und Systemtechnik, 97232 Giebelstadt (DE)
(72) Erfinder: FAIST, Bernd, 97199 Ochsenfurt (DE); WIEHL, Michael, 97255 Sonderhofen (DE)
(74) Vertreter: Witte, Weller & Partner
(86) Internationale Anmeldenummer: PCT/EP2010/062545
(87) Internationale Veröffentlichungsnummer: WO 2011/026788

(56) Entgegenhaltungen:
- BE-A7- 1 004 934
- GB-A- 2 072 606
- US-A- 5 389 045

## Beschreibung

Die vorliegende Erfindung betrifft eine Vorrichtung sowie ein Verfahren zum Spannen von endlos umlaufenden Fördermitteln, wie z.B. Ketten, Flachriemen, Zahn- oder Keilriemen und ähnlichen Riemen.

Die Patentanmeldung GB 2 187 429 A offenbart eine Kettenspannvorrichtung, die Räder mit einem gummibasierten elastischen Körpern an umlaufenden Oberflächen davon aufweist. Die elastischen Körper weisen eine kleinere Breite als eine innere Breite von Verbindungsplatten von stufenantreibenden Ketten auf, so dass Kettenrollen der stufenantreibenden Ketten von den gummbasierten elastischen Körpern aufgenommen werden, wodurch eine stoßabsorbierende Wirkung mittels einer einfachen Anordnung erhalten werden kann.

Das Patent US 2,939,571 offenbart eine Spannanordnung und insbesondere eine schraubenförmige Gurtspannanordnung, die eine Schnelltrenneinrichtung zum Bewegen eines Gurtrollenlagers und einer Spannschraube in eine Position aufweist, um ein Spiel in einem zugehörigen Förderer unabhängig von gewöhnlichen Einstellmitteln vorzusehen. Es werden eine Spannschraube mit Mutter und Gegenmutter sowie Anschlagringe offenbart.

Aus der US 5,389,045 A ist eine Riemenfördereinrichtung bekannt, die einen Förderriemenspannmechanismus aufweist, der ein Verstellmittel und ein Anzeigemittel aufweist, wobei das Anzeigemittel dazu ausgebildet ist, anzuzeigen, wenn sich eine Spannkraft des Förderriemens innerhalb eines vorgewählten Spannungsbereichs befindet.

Das deutsche Gebrauchsmuster DE 200 20 350 U1 beschreibt eine Vorrichtung zum Spannen von endlosen Förder- oder Antriebsmitteln mit einem sich an eine Seite des Förder- bzw. Antriebsmittels anlegenden Druckkörper. Der Druckkörper bildet einen Endbogen bzw. Endschenkel eines in Seitenansicht etwa S- bzw. Z-förmigen Kunststoffelements. Ein dem Druckkörper gegenüberliegendes Ende des S-Bogens bzw. Z-Schenkels ist als Montageelement für eine Spannvorrichtung ausgebildet. Als weitere Quellen für den Stand der Technik werden dort u.a. angegeben: DE 686 129 A, US 2,717,520 A1, DE 1 724 654 U1, DE 1 108 035 B, JP 520-779 76 sowie DE 81 29 447 U1.

Viele verschiedene Förderer werden heutzutage in der Lager- und Kommissioniertechnik zum Transport von Ladungsträgern, wie z.B. Tablaren, Kisten, Behältern, Paletten, usw. eingesetzt. In Abhängigkeit von den zu fördernden Gütern werden verschiedene Fördersysteme eingesetzt. So werden z.B. Behälterfördersysteme für Behälter und Kartons mit Breiten bis ca. 800 mm und 60 kg eingesetzt. Palettenfördersysteme werden üblicherweise für palettiertes Fördergut bis ca. 1.400 mm und 1.500 kg eingesetzt. Spezialfördersysteme werden für Fördergut mit größerem Gewicht und Volumen oder mit Sonderformen eingesetzt. Standartfördersysteme sind: Rutschen, Bandförderer, Gurtförderer, Röllchenbahnen, Rollenbahnen, Tragkettenförderer, Plattenbandförderer, S-Förderer und Ähnliche. Kettenförderer stellen Stückgutförderer mit üblicherweise Ein- oder Zwei-Strangketten als Zugmittel dar und werden häufig als Palettenförderer eingesetzt. Im Nachfolgenden wird der Begriff "Zugmittel" derart verstanden, dass darunter Riemen, Flachriemen, Zahnriemen, Keilriemen, Ketten und Ähnliches zu verstehen ist. Mit Hilfe des Zugmittels werden die Fördersysteme angetrieben. Dazu werden direkt oder indirekt häufig Elektromotoren eingesetzt.

Damit ein zuverlässiger Betrieb des Fördersystems gewährleistet ist, sollten die Zugmittel immer unter einer vorbestimmten (minimalen) Spannung stehen. Die Zugmittelspannung kann, sollte exemplarisch eine Kette als Zugmittel eingesetzt werden, mit einem sogenannten Kettenspanner eingestellt werden. Die Einstellung einer Spannung einer Förderkette erfolgt bei einer Erstmontage des Fördersystems oder bei Wartungen eines Kettentriebs.

Konventionell wird die Kettenspannung mit einer Federwaage eingestellt. Dazu muss das Fördersystem stillstehen und ohne Last sein. Die Kette wird dann an ihrem Obertrum mit einer Abhebekraft von z.B. 20 kg, vorzugsweise im Bereich der Mitte des Kettenförderers, angehoben. Anschließend wird ein Abstand (Höhe) zwischen einer Kettenebene im Normalzustand und einer Oberkante der angehobenen Kette (geometrisch) bestimmt. Dazu kann z.B. ein Lineal oder ein Maßband eingesetzt werden.

In Abhängigkeit von einer Länge der Kette muss der Abstand einen vorbestimmten Wert annehmen. Ist der gemessene Abstand, z.B. aufgrund von Verschleiß der Kettenglieder, größer als der vorbestimmte Wert, d.h. die Kettenspannung hat über die Zeit nachgelassen, dann muss die Kettenspannung neu eingestellt werden. Dazu sind diverse Spannvorrichtungen vorbekannt. Ist die vorgeschriebene Kettenspannung dann eingestellt, wird der Abstand zur Verifizierung erneut gemessen.

Diese Vorgehensweise ist insofern nachteilig, dass eine Federwaage benötigt wird und dass der Einstellwert von einer Länge des Förderers abhängig ist und deshalb aus einer Tabelle abgelesen werden muss. Üblicherweise wird ein Spannrad mit einem vorgegebenen Drehmoment fixiert. Dazu ist ein geeigneter Drehmomentschlüssel erforderlich. Die meisten Drehmomentschlüssel sind ungeeignet, weil eine Spannspindel am Boden einer Nuss des Schlüssels anschlägt. Deshalb wird oft ergänzend ein hinten offener Ring- oder Gabelschlüssel benötigt.

Des Weiteren ist das Einzelergebnis häufig stark von der Reibung einer Fixiermutter abhängig, was in einer inakzeptablen Ungenauigkeit resultiert.

Deshalb ist eine Aufgabe der vorliegenden Erfindung, eine Zug- bzw. Fördermittelspannung mit einfachen Mitteln ohne zusätzliche Messwerkzeuge richtig einzustellen.

Diese Aufgabe wird mit einer Vorrichtung zum Spannen von endlos umlaufenden Fördermitteln, insbesondere Ketten, Flachringen, Zahn- oder Keilriemen, gelöst, wobei die Vorrichtung aufweist: eine Spannschraube; ein Lager für ein Spannrad, wobei das Lager starr an die Spannschraube koppelbar ist; eine Mutter; eine Kontermutter; ein Federelement, das zwischen der Mutter und der Kontermutter auf der Schraube sitzt; und einen Anschlagring, der zwischen der Mutter und der Kontermutter auf der Schraube sitzt, wobei der Anschlagring einen Innendurchmesser aufweist, der zur vollständigen Aufnahme des Federelements innerhalb des Anschlagrings geeignet ist, wobei eine Breite des Anschlagrings derart gewählt ist, dass das Federelement, wenn es vollständig im Anschlagring aufgenommen ist, mit einer Kraft gestaucht ist, die einer gewünschten Spannkraft des Fördermittels entspricht;
wobei die Mutter und die Kontermutter sicher gegeneinander fixiert sind; und wobei die Kraft beim Festziehen der Kontermutter über den Anschlagring auf die Mutter geleitet wird.

Beim Festziehen der Spannmutter wird das Federelement durch die ausgeübte Spannkraft gestaucht. Das Federelement ist in seiner Steifigkeit so ausgelegt, dass es beim Erreichen der gewünschten Spannkraft gerade so weit gestaucht ist, dass das Federelement im Anschlagring zwischen der Mutter und einem weiteren Element eingeklemmt wird. Die Spannschraube wird dabei nur so weit festgezogen, dass sich der Anschlagring nicht mehr frei bewegen lässt. In diesem Zustand wird die Kontermutter angezogen. Beim Festziehen der Kontermutter wird das Federelement nicht mehr weiter gestaucht, sondern die Spannkraft wird über den Anschlagring auf die Mutter geleitet. Dadurch kann die Kontermutter mit großer Kraft festgezogen werden, ohne die Spannkraft zu verändern. Durch das Festziehen der Kontermutter wird die Einstellung des Spannrades fixiert und kann sich bei einem Lastwechsel im Fördermittel nicht mehr verschieben.

Somit ist es bei einer Erstmontage oder einer Wartung des Zugmittels möglich, eine vordefinierte Zugmittelspannung ohne Messwerkzeug einzustellen. Eine Bedienperson braucht kein spezielles Werkzeug mehr. Die Muttern können nie zu fest angezogen werden. Die erfindungsgemäße Spannvorrichtung ist in diesem Sinne sicher und einfach. Weiteres Werkzeug wird nicht benötigt.

Die vorliegende Erfindung ist zusätzlich zum Einsatz in einem Leertrum auch für Förderer geeignet, die vorwärts und rückwärts laufen können. Die Erfindung ist nach einem Festziehen der Kontermutter nicht mehr frei federnd. Das hat den Vorteil, dass die Einstellung des Spannrads nicht durch Zugkräfte des Antriebs beeinflusst wird. Die Erfindung funktioniert also lastunabhängig.

Gemäß einer bevorzugten Ausführungsform ist ferner ein Gehäuse mit einer Öffnung zum Ein- bzw. Durchführen der Spannschraube vorgesehen.

Das Gehäuse dient als Widerlager für die Mutter, die Kontermutter und den Anschlagring. Der Anschlagring stützt sich, direkt oder indirekt, am Gehäuse während eines Einstellvorgangs ab.

Ferner ist es von Vorteil, wenn die Mutter und die Kontermutter auf sich gegenüberliegenden Seiten der Öffnung im Gehäuse angeordnet sind, wobei der Anschlagring und das Federelement auf einer der Seiten angeordnet sind.

Insbesondere weist das Gehäuse eine (seitliche) Eingriffsöffnung auf, die so angeordnet ist, dass die Mutter oder die Kontermutter innerhalb des Gehäuses auf der Spannschraube in eine festgezogene Position drehbar ist.

Vorzugsweise ist mindestens eine Unterlegscheibe vorgesehen, um einen Verschleiß des Anschlagrings und des Federelements so gering wie möglich zu halten.

Weiterhin ist es von Vorteil, wenn die Breite des Anschlagrings und eine Federkonstante des Federelements so aufeinander abgestimmt sind, dass das Federelement unter Einwirkung der Spannkraft auf eine Länge gestaucht wird, die der Breite des Anschlagrings entspricht.

Über die Breite des Anschlagrings kann also die Spannkraft festgelegt werden. Dies ist insbesondere bei einem modularen Baukastensystem von Vorteil, wenn ein Monteur vor Ort in Abhängigkeit von einer Länge des Zugmittels eine Spannkraft einstellen muss. Dies ist besonders bei einer Erstmontage von Vorteil.

Bei einer weiteren Ausgestaltung ist das Federelement ein Gummipuffer, eine Spiralfeder oder eine Tellerfeder.

Außerdem wird ein Fördersystem mit einem Fördermittel und mit einer erfindungsgemäßen Spannvorrichtung sowie ein Verfahren zum Spannen von endlos umlaufenden Fördermitteln vorgeschlagen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Seitenansicht eines Kettenförderers;
- Figur 2: eine teilweise geschnittene Seitenansicht einer erfindungsgemäßen Spannvorrichtung; und
- Figur 3: eine perspektivische Ansicht der Spannvorrichtung der Figur 2.

Im Nachfolgenden werden die Begriffe Zugmittel und Fördermittel äquivalent verwendet, wobei die eingangs erläuterte Verallgemeinerung auch nachfolgend gilt.

Nachfolgend wird exemplarisch ein Kettenförderer 10 erläutert werden. Es versteht sich, dass die dort verwendete Förderkette durch jedes andere beliebige Zugmittel 12 ausgetauscht werden könnte.

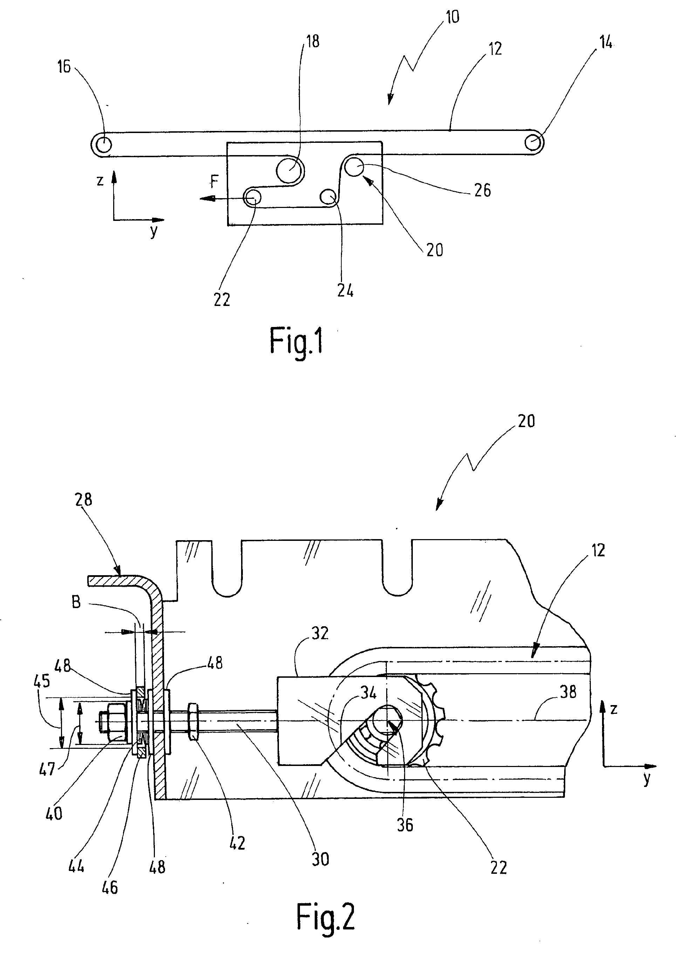

In der Fig. 1 ist eine schematische Seitenansicht eines exemplarischen Kettenförderers 10 mit einer Förderkette 12 gezeigt, die um Umlenkrollen 14 und 16 endlos umläuft. Jeder andere Förderertyp könnte ebenfalls eingesetzt werden. Angetrieben wird die Kette 12 mit einem Antriebszahnrad 18, welches mit einem hier nicht dargestellten Antrieb (z.B. E-Motor) verbunden ist. Im Bereich des Antriebszahnrads 18 ist eine Spannvorrichtung 20 gemäß der vorliegenden Erfindung vorgesehen, wobei ein Spann(zahn)rad 22 möglichst in unmittelbarer Nähe zum Antriebszahnrad anzuordnen ist, damit beim Spannen der Kette 12 möglichst wenig Verfälschungen aufgrund eines Durchhängens der Kette 12 auftreten. Des Weiteren können weitere Umlenk- bzw. Führungsrollen 24, 26 vorgesehen sein, damit das Spannrad 22 und das Antriebszahnrad 18 möglichst lang mit der Kette 12 kämmen.

Das Spannrad 22 ist in einer y-Richtung beweglich gelagert und kann mit einer Spannkraft F - hier unter Zug - derart bewegt werden, dass die Spannung in der Kette 12 zunimmt.

Bezug nehmend auf Fig. 2 ist eine teilweise geschnittene Ansicht der Spannvorrichtung 20 der Fig. 1 dargestellt.

Die Spannvorrichtung 20 der Fig. 2 weist ein Gehäuse 28 auf, an welchem sich eine Spannschraube 30 abstützt. Die Spannschraube 30 ist starr an ein Lagerelement 32 für das Spannrad 22 koppelbar. Das Lagerelement 32 weist eine schlitzartige Ausnehmung 34 zur Aufnahme einer Achse 36 des Spannrads 22 auf. Mit Hilfe der Spannschraube 30 kann das Spannrad 22 in einer Längsrichtung 38 (parallel zur y-Richtung) positiv und negativ bewegt werden. Eine Negativbewegung erhöht die Spannung in der Kette 12.

Außerhalb des Gehäuses 28 ist eine (Stell)Mutter 40 vorgesehen, die einer Kontermutter 42 innerhalb des Gehäuses 28 gegenüberliegt. Des Weiteren ist zwischen der Mutter 40 und dem Gehäuse 28 ein Federelement 44 vorgesehen, welches auf die Schraube 30 aufgesteckt ist. Über dieses Federelement 44 wird ein Anschlagring 46 gestülpt, dessen Breite B für die Spannkraft F verantwortlich ist.

Ein Innendurchmesser 45 des Anschlagrings 46 ist so gewählt, dass das Federelement 44 mit seinem Außendurchmesser 47 unter Berücksichtigung eines ausreichenden Spiels in dem Anschlagring 46 aufgenommen werden kann, insbesondere wenn das Federelement 44 gestaucht wird. In der Fig. 2 ist das Federelement 44 in einer entspannten Stellung gezeigt.

Des Weiteren können eine oder mehrere Unterlegscheiben 48 vorgesehen sein, wie sie exemplarisch in der Fig. 2 gezeigt sind.

Das Federelement 44 übt, sobald es gestaucht, d.h. zusammengedrückt, wird, eine Kraft aus, die das Lagerelement 32, und somit das Spannrad 22, nach außen (negative y-Richtung) zieht. Die Breite B des Anschlagrings 46 ist so gewählt, dass sie einer gewünschten Spannkraft F entspricht, die erforderlich ist, um das Federelement 44 auf eine Länge zu stauchen, die der Breite B entspricht.

Um die Kette 12 zu spannen, wird in einem ersten Schritt die Mutter 40 so fest angezogen, dass das Federelement 44 gegenüber dem Gehäuse 28 gerade so vorgespannt ist, dass das Federelement 44 eine gestauchte Länge B aufweist. Der Anschlagring 46 stößt dann über die Unterlegscheibe 48 gegen das Gehäuse 28 an. Eine Erhöhung der Feststellkraft der Schraube 40 führt zu keiner weiteren Stauchung des Federelements 44, da diese erhöhte Kraft durch den Anschlagring 46 kompensiert bzw. weitergeleitet wird.

Sobald die Mutter 40 derart festgezogen ist, kann die Kontermutter 42 ebenfalls festgezogen werden. Die dazu erforderliche Kraft kann beliebig groß gewählt werden und bewirkt lediglich eine sichere Fixierung der Muttern 40 und 42 gegeneinander. Der Einsatz eines Drehmomentenschlüssels ist nicht mehr erforderlich. Die Spannkraft F wird allein durch die in dem Federelement 44 gespeicherte Kraft definiert.

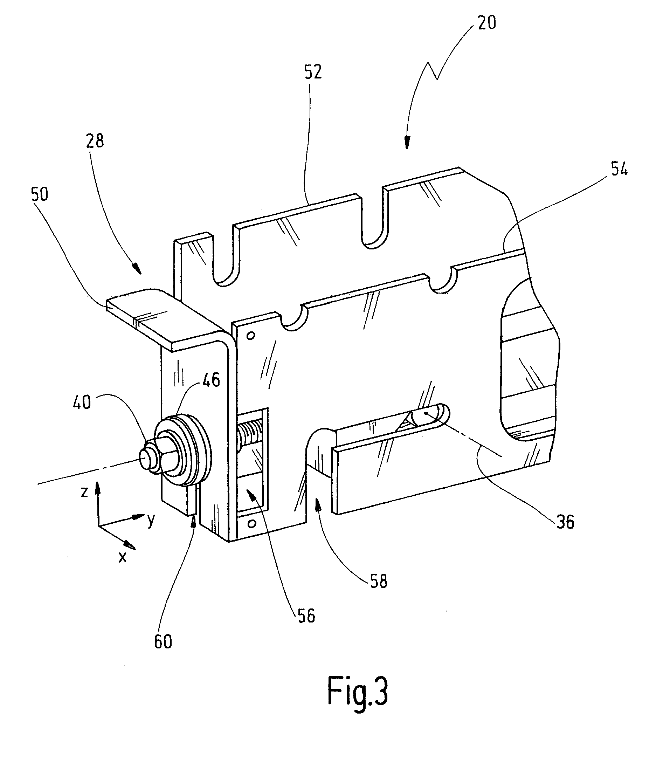

Bezug nehmend auf Fig. 3 ist eine perspektivische Ansicht der Spannvorrichtung 20 der Fig. 2 gezeigt, wobei man von leicht schräg oben auf das Gehäuse 28 blickt.

Das Gehäuse 28 weist hier exemplarisch drei Seiten 50, 52 und 54 auf. Die Seite 54 weist eine Ausnehmung 56 auf, um Zugriff auf die Kontermutter 42 zu haben. Des Weiteren weist die Seite 54 eine Ausnehmung 58 auf, mit der das Lager 32 bzw. die Achse 36 innerhalb des Gehäuses, z.B. im Falle einer Erstmontage, platziert werden kann.

Die Seite 50 weist dazu eine schlitzförmige Ausnehmung 60 auf, in die die Spannschraube 30 von unten eingeschoben werden kann.

Es versteht sich, dass die Anordnung der Mutter 40 und der Kontermutter 42 bzw. des Anschlagrings 46 mit integriertem Federelement 44 vertauscht werden kann. Die Mutter 40 sowie der Anschlagring 46 und das Federelement 44 können auch im Gehäuse angeordnet werden.

## Patentansprüche

1. Vorrichtung (20) zum Spannen von endlos umlaufenden Fördermitteln (12), insbesondere Ketten, Flachriemen, Zahn- oder Keilriemen, mit:
einer Spannschraube (30);
einem Lager (32) für ein Spannrad (22), wobei das Lager (32) starr an die Spannschraube (30) gekoppelt ist;
einer Mutter (40);
einer Kontermutter (42);
einem Federelement (44), das zwischen der Mutter (40) und der Kontermutter (42) auf der Schraube (30) sitzt; und
einem Anschlagring (46), der zwischen der Mutter (40) und der Kontermutter (42) auf der Schraube (30) sitzt;
wobei der Anschlagring (46) einen Innendurchmesser (47) aufweist, der zur vollständigen Aufnahme des Federelements (44) innerhalb des Anschlagrings (46) geeignet ist;
wobei eine Breite (B) des Anschlagrings (46) derart gewählt ist, dass das Federelement (44), wenn es vollständig im Anschlagring (46) aufgenommen ist,
mit einer Kraft gestaucht ist, die einer gewünschten Spannkraft (F) des Förvermittels (12) entspricht;
wobei die Mutter (40) und die Kontermutter (42) sicher gegeneinander fixiert sind; und
wobei die Kraft beim Festziehen der Kontermutter (42) über den Anschlagring (46) auf die Mutter (40) geleitet wird.

2. Vorrichtung nach Anspruch 1, wobei ferner ein Gehäuse (28; 50-54) mit einer Öffnung (60) zum Ein- und Durchführen der Spannschraube (30) vorgesehen ist.

3. Vorrichtung nach Anspruch 2, wobei die Mutter (40) und die Kontermutter (42) auf sich gegenüberliegenden Selten der Öffnung (60) im Gehäuse (28) angeordnet sind und wobei der Anschlagring (46) und das Federelement (44) auf einer der Seiten angeordnet sind.

4. Vorrichtung nach Anspruch 2 oder 3, wobei das Gehäuse (28; 50-54) eine Eingriffsöffnung (56) aufweist, die so angeordnet ist, dass die Mutter (40) oder die Kontermutter (42) innerhalb des Gehäuse (28; 50-54) auf der Spannschraube (30) in eine festgezogene Position drehbar ist.

5. Vorrichtung nach einem der vorhergehenden Ansprüche, wobei ferner mindestens eine Unterlegscheibe (48) vorgesehen ist.

6. Vorrichtung nach einem der vorhergehenden Ansprüche, wobei die Breite (B) des Anschlagrings (46) und eine Federkonstante des Federelements (44) so aufeinander abgestimmt sind, dass das Federelement (44) unter Einwirkung der Spannkraft (F) auf eine Länge gestaucht wird, die der Breite (B) des Anschlagrings (46) entspricht.

7. Vorrichtung nach einem der vorhergehenden Ansprüche, wobei das Federelement (44) ein Gummipuffer, eine Spiralfeder oder eine Tellerfeder ist.

8. Fördersystem mit einem Fördermittel (12) und mit einer Vorrichtung (20) zum Spannen des Fördermittels (12) nach einem der vorhergehenden Ansprüche.

9. Verfahren zum Spannen eines endlos umlaufenden Fördermittels (12) eines Förderers, mit den folgenden Schritten:
- Bereitstellen einer Vorrichtung nach einem der Ansprüche 1 bis 7, wobei bei der Vorrichtung ferner ein Gehäuse (28) mit einer Öffnung (60) zum Ein- bzw. Durchführen der Spannschraube (30) vorgesehen ist;
- Anziehen der Mutter (40) bis das Federelement (44) gegenüber dem Gehäuse (28) gerade so vorgespannt ist, dass das Federelement (44) eine gestauchte Länge aufweist, die der gewünschten Spannkraft (F) entspricht, und die der Breite (B) des Anschlagrings (46) entspricht; und
- Festziehen der Kontermutter (42), sobald die Mutter (40) festgezogen ist, mit einer beliebigen Kraft zur sicheren Fixierung der Muttern (40) und der Kontermutter (42) gegeneinander, wobei die Spannkraft (F) allein durch die in dem Federelement (44) gespeicherte Kraft definiert wird.

## Claims

1. A device (20) for tensioning an endlessly circulating conveying device (12), in particular a chain, flat belt, sprocket belt, or V-belt, comprising:
a tensioning screw (30);
a bearing (32) of a tensioning wheel (22), wherein the bearing (32) is coupled rigidly to the tensioning screw (30);
a nut (40);
a counter-nut (42);
a spring element (44) sitting between the nut (40) and the counter-nut (42) on the screw (30); and
an abutment ring (46) having an inside diameter (47) which is suitable for receiving the spring element (44) completely inside the abutment ring (46);
wherein a width (B) of the abutment ring (46) is selected such that the spring element (44), if completely received in the abutment ring (46), is compressed by a force corresponding to a desired tensioning force (F) of the conveying device (12); wherein the nut (40) and the counter-nut (42) are securely fixed against each other; and
wherein the force for fixing the counter-nut (42) is conducted to the nut (40) via the abutment ring (46).

2. The device of claim 1, which is further provided with a housing (28; 50-54) having an opening (60) for inserting and passing through the tensioning screw (30).

3. The device of claim 2, wherein the nut (40) and the counter-nut (42) are arranged at opposite sides of the opening (60) in the housing (28), and wherein the abutment ring (46) and the spring element (44) are arranged at one of the sides.

4. The device of claim 2 or 3, wherein the housing (28; 50-54) comprises an engagement opening (56) which is arranged such that the nut (40), or the counter-nut (42), is rotatable within the housing (28; 50-54) on the tensioning screw (30) to a fixed position.

5. The device of one of the preceding claims, further comprising at least one spring lock washer (48).

6. The device of one of the preceding claims, wherein the width (B) of the abutment ring (46) and a spring constant of the spring element (44) are adjusted to each other such that the spring element (44) is compressed under the effect of the tensioning force (F) to a length corresponding to the width (B) of the abutment ring (46).

7. The device of one of the preceding claims, wherein the spring element (44) is a rubber buffer, a spiral spring, or a disk spring.

8. A conveying system comprising a conveying device (12) and a device (20) for tensioning the conveying device (12) in accordance with one of the preceding claims.

9. A method for tensioning an endlessly circulating conveying device (12) of a conveyor comprising the steps of:
- providing a device of one of the claims 1 to 7, wherein the device is further provided with a housing (28) having an opening (60) for inserting and passing through the tensioning screw (30);
- tightening the nut (40) until the spring element (44) is just biased such that the spring element (44) has a compressed length corresponding to the desired tensioning force (F) and corresponding to the width (B) of the abutment ring (46); and
- tightening the counter-nut (42) as soon as the nut (40) is tightened by means of an arbitrary force for securely fixing the nut (40) and the counter-nut (42) against each other, wherein the tensioning force (F) is defined only by the force stored in the spring element (44).

## Revendications

1. Dispositif (20) pour tendre des moyens de transport (12) tournant sans fin, en particulier des chaînes, des courroies plates, des courroies dentées ou trapézoïdales, comprenant :
une vis de tension (30) ;
un palier (32) pour une roue tendeuse (22), dans lequel le palier (32) est accouplé rigidement à la vis de tension (30) ;
un écrou (40) ;
un contre-écrou (42) ;
un élément ressort (44) qui repose sur la vis (30) entre l'écrou (40) et le contreécrou (42) ; et
une bague de butée (46) qui repose sur la vis (30) entre l'écrou (40) et le contreécrou (42) ;
dans lequel la bague de butée (46) présente un diamètre intérieur (47) qui est approprié pour recevoir entièrement l'élément ressort (44) à l'intérieur de la bague de butée (46) ;
dans lequel une largeur (B) de la bague de butée (46) est sélectionnée de telle sorte que l'élément ressort (44), lorsqu'il est reçu entièrement dans la bague de butée (46), soit comprimé par une force qui correspond à une force de tension souhaitée (F) du moyen de transport (12) ;
dans lequel l'écrou (40) et le contre-écrou (42) sont fixés de manière sûre l'un par rapport à l'autre ; et
dans lequel la force lors du serrage à bloc du contre-écrou (42) est dirigée vers l'écrou (40) par le biais de la bague de butée (46).

2. Dispositif selon la revendication 1, dans lequel il est en outre prévu un boîtier (28 ; 50-54) comprenant une ouverture (60) pour l'insertion et le passage de la vis de tension (30).

3. Dispositif selon la revendication 2, dans lequel l'écrou (40) et le contre-écrou (42) sont disposés sur des côtés opposés de l'ouverture (60) dans le boîtier (28), et dans lequel la bague de butée (46) et l'élément ressort (44) sont disposés sur l'un des côtés.

4. Dispositif selon la revendication 2 ou 3, dans lequel le boîtier (28 ; 50-54) comprend une ouverture d'engagement (56) qui est disposée de telle sorte que l'écrou (40) ou le contre-écrou (42) à l'intérieur du boîtier (28 ; 50-54) puisse tourner dans une position serrée à bloc sur la vis de tension (30).

5. Dispositif selon l'une quelconque des revendications précédentes, dans lequel il est en outre prévu au moins une rondelle (48).

6. Dispositif selon l'une quelconque des revendications précédentes, dans lequel la largeur (B) de la bague de butée (46) et une constante de ressort de l'élément ressort (44) sont adaptées l'une à l'autre de telle sorte que, sous l'action de la force de tension (F), l'élément ressort (44) soit comprimé jusqu'à une longueur qui correspond à la largeur (B) de la bague de butée (46).

7. Dispositif selon l'une quelconque des revendications précédentes, dans lequel l'élément ressort (44) est un tampon en caoutchouc, un ressort spiral ou un ressort Belleville.

8. Système de transport comprenant un moyen de transport (12) et comprenant un dispositif (20) pour tendre le moyen de transport (12) selon l'une quelconque des revendications précédentes.

9. Procédé pour tendre un moyen de transport (12) tournant sans fin d'un transporteur, comprenant les étapes suivantes :
- fournir un dispositif selon l'une quelconque des revendications 1 à 7, dans lequel il est en outre prévu dans le dispositif un boîtier (28) comprenant une ouverture (60) pour l'insertion et le passage de la vis de tension (30) ;
- serrer l'écrou (40) jusqu'à ce que l'élément ressort (44) soit précisément précontraint par rapport au boîtier (28) de telle sorte que l'élément ressort (44) présente une longueur comprimée qui correspond à la force de tension souhaitée (F) et qui correspond à la largeur (B) de la bague de butée (46) ; et
- serrer à bloc le contre-écrou (42) dès que l'écrou (40) est serré à bloc, par une force quelconque pour fixer de manière sûre l'écrou (40) et le contre-écrou (42) l'un par rapport à l'autre, dans lequel la force de tension (F) est définie uniquement par la force accumulée dans l'élément ressort (44).
